Europäisches Patentamt

(19) European Patent Office

Office européen des brevets

(11) Veröffentlichungsnummer: **0 219 600**
A2

(12) # EUROPÄISCHE PATENTANMELDUNG

(21) Anmeldenummer: 86106330.3

(22) Anmeldetag: 09.05.86

(51) Int. Cl.⁴: **B 01 J 35/04**

(30) Priorität: 27.08.85 DE 3530544

(43) Veröffentlichungstag der Anmeldung:
29.04.87 Patentblatt 87/18

(84) Benannte Vertragsstaaten:
AT BE CH DE FR GB IT LI LU NL SE

(71) Anmelder: DIDIER-WERKE AG
Lessingstrasse 16-18
D-6200 Wiesbaden(DE)

(71) Anmelder: Didier Engineering GmbH
Alfredstrasse 28 Postfach 10 09 45
D-4300 Essen 1(DE)

(72) Erfinder: Wagener, Dietrich, Prof.Dr.
Hesselerkamp 7a
D-4300 Essen 16(DE)

(72) Erfinder: Laue, Karl Heinrich
Bergische Str. 41
D-4320 Hattingen 16(DE)

(72) Erfinder: Wunderlich, Egmar
Kölner Str. 418
D-4330 Mülheim(DE)

(72) Erfinder: Sander, Theo
Cäsarstr. 23
D-4300 Essen(DE)

(72) Erfinder: Flockenhaus, Claus, Prof. Dr.
Tersteegenweg 16
D-4300 Essen 1(DE)

(72) Erfinder: Hackler, Erich
Kettwiger Weinberg 6
D-4300 Essen 18(DE)

(72) Erfinder: Levkov, Blagoje, Dr.
Rudolf-Vogt-Strasse 41
D-6200 Wiesbaden(DE)

(72) Erfinder: Grimm, Daniel
Hauptstrasse 10
D-6229 Schlangenbad-Bärstadt(DE)

(72) Erfinder: Kainer, Hartmut, Dr.
Sauerbruchstrasse 1a
D-6200 Wiesbaden 12(DE)

(72) Erfinder: Stein, Hermann
Auf dem Köppel 2
D-6702 Bad Dürkheim(DE)

(74) Vertreter: Brückner, Raimund
c/o Didier-Werke AG Lessingstrasse 16-18
D-6200 Wiesbaden(DE)

(54) Katalysator zum Abscheiden von Stickoxiden aus Verbrennungsabgasen.

(57) Ein Katalysator zum Abscheiden von Stickoxiden aus staubführenden Verbrennungsabgasen weist Schlitze 4 für die Abgasströmung auf. Er ist aus einzelnen keramischen Platten aufgebaut. Die Abriebfestigkeit der Platten ist so bemessen, daß der Staub des die Schlitze durchströmenden Abgases die Plattenoberfläche abreibt, wobei der Staub den Abrieb mitnimmt.

EP 0 219 600 A2

./...

22.08.1985
KXR/Co/Sc 0219600
PA 3528

DIDIER ENGINEERING GMBH
Alfredstraße 28
4300 Essen 1

Katalysator zum Abscheiden von Stickoxiden
aus Verbrennungsabgasen

(Zusatz zu Patentanmeldung P 34 30 886.5-41)

Die Erfindung betrifft einen Katalysator zum Abscheiden von Stickoxiden aus staubführenden Verbrennungsabgasen mittels Ammoniak, wobei der Katalysator Passagen für die Abgasdurchströmung aufweist und aus einzelnen keramischen Formkörpern aufgebaut ist, die eine porige Oberfläche und eine Abriebfestigkeit aufweisen, die so bemessen ist, daß der Staub des die Passagen durchströmenden Abgases die Katalysator-Oberfläche abreibt, wobei der Staub den Abrieb mitnimmt, nach Patentanmeldung P 34 30 886.5-41.

In der Hauptanmeldung ist ein derartiger Katalysator beschrieben. Dessen Oberfläche wird durch den Staubabrieb ständig erneuert. Der Katalysator hat eine durch den Abrieb begrenzte, vorher bestimmbare Lebensdauer bei gleichbleibend hoher Aktivität. Es läßt sich für den Katalysator ein leicht entsorgbares Material verwenden, dessen Abrieb zusammen mit dem Staub entsorgt werden kann. Zur Verbesserung des Reinigungseffektes sind nach der Hauptanmeldung zwischen den Formkörpern Durchtrittsöffnungen quer zur Strömungsrichtung in den Passagen vorgesehen. Die Durchtrittsöffnungen haben eine Ablenkung von Staubpartikeln aus der Strömungsrichtung in die Passagen zur Folge. Diese treffen dadurch in einem spitzen Winkel auf die aktive Katalysator-Oberfläche.

In der Hauptanmeldung sind auch Ausgangsmaterialien für die Herstellung der Formkörper beschrieben.

Die Formkörper nach der Hauptanmeldung sind dreidimensional geformt. Sie sind im Querschnitt gitterförmig gestaltet, wobei die Durchtrittsöffnungen durch Beine gebildet sind.

Aufgabe der Erfindung ist es, einen Katalysator der eingangs genannten Art vorzuschlagen, dessen Formkörperaufbau vereinfacht ist.

Erfindungsgemäß ist obige Aufgabe bei einem Katalysaotr der eingangs genannten Art dadurch gelöst, daß der Katalysator aus ebenen Platten als Formkörper aufgebaut ist, die in parallelen Ebenen aufgestellt sind, zwischen denen Schlitze als Passagen bestehen. Die Herstellung solcher flächigen Formkörper ist besonders einfach. Es hat sich gezeigt, daß in den Schlitzen der gewünschte Abrieb stattfindet.

In bevorzugter Ausgestaltung der Erfindung ist die Breite jedes Schlitzes etwa gleich der 2 bis 4,5fachen Plattendicke. Es wurde gefunden, daß bei diesem Verhältnis zwischen Plattendicke und Schlitzbreite die Katalysator-Oberfläche ständig durch Abrieb gereinigt wird, ohne daß der Katalysator zu schnell verbraucht wird.

In bevorzugter Ausgestaltung der Erfindung sind an jeder Platte Sockel ausgebildet, mit denen sie auf einer benachbarten Platte aufsteht. Zwischen den Sockeln weist die Platte eine Aussparung auf, die mit dem Rand der benachbarten Platte eine Durchtrittsöffnung quer zur Strömungsrichtung in den Schlitzen bildet. Durch die Durchtrittsöffnungen stellt sich eine Staubströmung ein, die zur Folge hat, daß Staubpartikel in spitzen Winkeln auf die Plattenoberflächen treffen. Der Reinigungseffekt der Plattenoberflächen ist dadurch verbessert.

In Weiterbildung der Erfindung weist die Platte am der Aussparung gegenüberliegenden Rand einen Vorsprung auf, der zwischen die Sockel der auf ihr aufstehenden Platte greift. Dadurch ist erreicht, daß aufeinanderstehende Platten in der Plattenebene nicht gegeneinander verrutschen.

Sollen Verbrennungsabgase gereinigt werden, deren Staubanteil, insbesondere hinsichtlich des grobkörnigen Staubanteils, nicht von vornherein ausreichend hoch ist, um den gewünschten Katalysatorabrieb zu erreichen, wird der Staubanteil durch Zusatz von Staub erhöht.

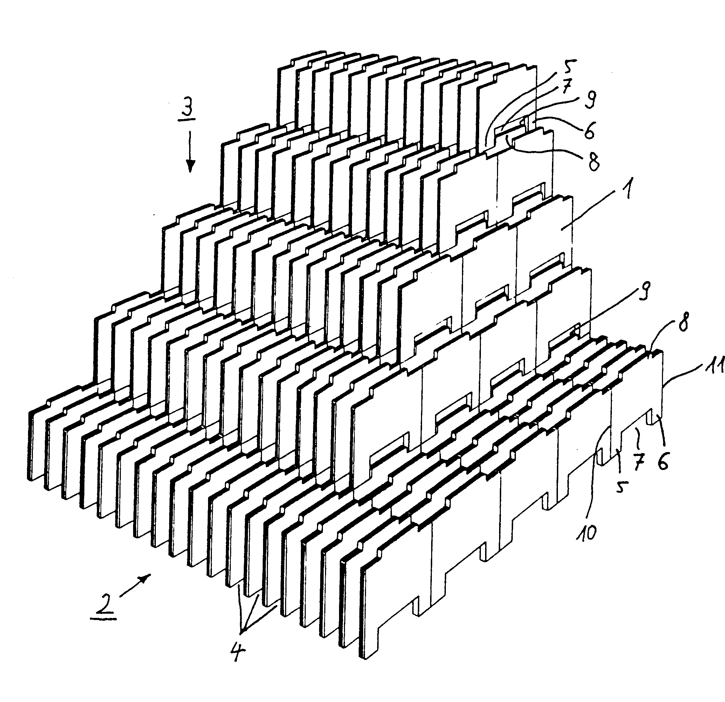

Weitere vorteilhafte Ausgestaltungen der Erfindung ergeben sich aus den weiteren Unteransprüchen und der folgenden Beschreibung eines Ausführungsbeispiels. Die Figur zeigt einen Katalysatoraufbau in perspektivischer Teilansicht.

Der Katalysator ist aus einer Vielzahl gleicher Platten 1 aufgebaut. Diese sind in mehreren horizontalen Reihen 2 und mehreren vertikalen Reihen 3 angeordnet. Die Platten 1 stehen in den Reihen 2, 3 in parallelen Ebenen. Zwischen den Ebenen bestehen Schlitze 4. Die Breite der Schlitze 4 beträgt etwa das 2 bis 4,5fache der Dicke der Platten 1. Auch mit einer 2 bis 4,5fachen Breite des Schlitzes 4 im Vergleich zur Dicke der Platten 1 lassen sich noch die gewünschten Ergebnisse erzielen.

Die Platte 1 weist an ihrem unteren Rand Sockel 5, 6 auf, zwischen denen eine Aussparung 7 besteht. An ihrem oberen Rand ist die Platte 1 mit einem Vorsprung 8 versehen, dessen Länge der Länge der Aussparung 7 entspricht. Die Höhe des Vorsprungs 8 ist kleiner als die Höhe der Aussparung 7, so daß zwischen zwei übereinandergestellten Platten 1 eine Durchtrittsöffnung 9 entsteht. Über die Durchtrittsöffnungen 9 sind zwei benachbarte Schlitze 4 miteinander verbunden.

Die Sockel 5, 6 einer oberen Platte 1 stehen neben dem Vorsprung 8 einer unteren Platte auf dieser auf. Zwei aufeinandergestellte Platten können dadurch nicht gegeneinander verrutschen.

Die zwischen dem oberen Rand und dem unteren Rand verlaufenden Seitenränder 10, 11 der Platten 1 sind geradlinig, so daß die Platten 1 in den horizontalen Reihen dicht aneinanderstehen.

0219600

Gegen ein Umkuppen sind die Platten 1 mittels nicht näher dargestellter
Abstandhalter gehalten.

Im Betrieb werden die Schlitze 4 in vertikaler Richtung von Verbrennungsabgas durchströmt. Der in dem Verbrennungsabgas enthaltene Staub führt zu
einem ständigen Abrieb der Platten. Infolge von Druckunterschieden in den
einzelnen Schlitzen 4 werden auch die Durchtrittsöffnungen 9 durchströmt,
so daß dem Staub eine auf die Plattenoberfläche gerichtete Strömungskomponente aufgeprägt wird, welche die Oberflächenbeaufschlagung der Platten 1
erhöht.

22.08.1985
KXR/Ga/Sc
PA 3528 **0219600**

-1-

DIDIER ENGINEERING GMBH
Alfredstraße 28
4300 Essen 1

Katalysator zum Abscheiden von Stickoxiden
aus Verbrennungsabgasen

(Zusatz zu Patentanmeldung P 34 30 886.5-41)

P a t e n t a n s p r ü c h e:

1. Katalysator zum Abscheiden von Stickoxiden aus staubführenden Verbrennungsabgasen mittels Ammoniak, wobei der Katalysator Passagen für die
   Abgasdurchströmung aufweist und aus einzelnen keramischen Formkörpern
   aufgebaut ist, die eine porige Oberfläche und eine Abriebfestigkeit aufweisen, die so bemessen ist, daß der Staub des die Passagen
   durchströmenden Abgases die Katalysator-Oberfläche abreibt, wobei der
   Staub den Abrieb mitnimmt, nach Patentanmeldung P 34 30 886.5-41,
   dadurch gekennzeichnet, daß der Katalysator aus ebenen Platten (1) als
   Formkörper aufgebaut ist, die in parallelen Ebenen (2, 3) aufgestellt
   sind, zwischen denen Schlitze (4) als Passagen bestehen.

2. Katalysator nach Anspruch 1, dadurch gekennzeichnet, daß die Breite
   jedes Schlitzes (4) etwa der 2 bis 4,5fachen Plattendicke entspricht.

3. Katalysator nach Anspruch 1 oder 2, dadurch gekennzeichnet, daß an jeder
   Platte (1) Sockel (5, 6) ausgebildet sind, mit denen sie auf einer
   benachbarten Platte aufsteht, und daß die Platte (1) zwischen den
   Sockeln (5, 6) eine Aussparung (7) aufweist, die mit dem Rand der benachbarten Platte eine Durchtrittsöffnung (9) quer zur Strömungsrichtung in
   den Schlitzen (4) bildet.

-2-

4. Katalysator nach Anspruch 3, dadurch gekennzeichnet, daß die Platte (1) am der Aussparung (7) gegenüberliegenden Rand einen Vorsprung (8) aufweist, der zwischen die Sockel (5, 6) der auf ihr aufstehenden Platte (1) greift.

5. Katalysator nach Anspruch 3 oder 4, dadurch gekennzeichnet, daß die Platte (1) zwei Sockel (5, 6) aufweist.

6. Katalysator nach einem der vorhergehenden Ansprüche, dadurch gekennzeichnet, daß die beiden Seitenränder (10, 11) der Platte (1) geradlinig parallel verlaufen.